# EUROPÄISCHE PATENTSCHRIFT

(11) **EP 1 525 417 B1**
(45) Veröffentlichungstag und Bekanntmachung des Hinweises auf die Patenterteilung: **21.12.2005**
(21) Anmeldenummer: 04739486.1
(22) Anmeldetag: 01.06.2004
(51) Int. Cl.: F16K 11/087

(54) **VENTIL, INSBESONDERE DAMPFVENTIL**
VALVE, IN PARTICULAR STEAM VALVE
VANNE, EN PARTICULIER VANNE DE PRISE DE VAPEUR

(30) Priorität: 30.05.2003 DE 10324874
(43) Veröffentlichungstag der Anmeldung: 27.04.2005
(73) Patentinhaber: Weinhold, Karl Dipl.-Ing. (FH), D-41464 Neuss (DE)
(72) Erfinder: Weinhold, Karl Dipl.-Ing. (FH), D-41464 Neuss (DE)
(74) Vertreter: Thielmann, Andreas
(86) Internationale Anmeldenummer: PCT/EP2004/005886
(87) Internationale Veröffentlichungsnummer: WO 2004/106785

(56) Entgegenhaltungen:
- DE-B- 2 401 459
- DE-U- 9 202 121
- US-A- 4 304 252
- US-A- 5 445 187

## Beschreibung

Die Erfindung betrifft ein Ventil, insbesondere Dampfventil, mit einem Gehäuse, in das ein Eingangsstutzen, ein Ausgangsstutzen und ein Druckentlastungsauslass münden, mit einem drehbeweglich gelagerten, kugelförmigen Schließteil, der von einem Handhebel bewegbar ist, wobei in geschlossener Stellung der Ausgangsstutzen mit dem Druckentlastungsauslass in Verbindung steht (Schließstellung).

Ein Ventil mit den im Oberbegriff von Anspruch 1 definierten Merkmalen ist aus der DE-U-9 202 121 bekannt.

Solche Ventile, auch als "Dampfhähne" bezeichnet, werden insbesondere von der chemischen Industrie eingesetzt und sind in vielerlei Ausführungen bekannt und erhältlich. Obwohl die Ausführungen mit Druckentlastung bereits eine Weiterentwicklung dahingehend darstellen, dass der nach dem Schließen des Hauptdurchganges in der Leitung noch verbleibende Restdampfdruck entweichen kann, ist bei dieser technischen Ausführung nachteilig, dass in den Leitungen noch verbleibendes Kondensat bzw. Wasser umständlich entfernt werden muss. Dazu ist es beispielsweise notwendig, durch einen zusätzlichen Hahn Druckluft in die Leitung einzublasen, um das Kondensat oder Wasser aus den dampfdruckfreien Leitungen zu entfernen. Gerade in den Wintermonaten können die Leitungen durch Eisbildung des Kondensats bzw. Wassers verstopfen, so dass hier ein Verbesserungsbedarf besteht.

Ein bekannter Kugelhahn ist in der DE 202 09 195 U1 beschrieben. Der bekannte Kugelhahn weist ein einen im wesentlichen kugelförmigen Ventilkörper aufnehmendes Gehäuse auf, in dem ein zwischen zwei koaxial angeordneten Anschlüssen geradlinig verlaufender Durchlass vorgesehen ist, welcher in einer ersten Stellung des Ventilkörpers geöffnet und in einer zweiten Stellung des Ventilkörpers geschlossen werden kann. Bei diesem bekannten Ventil wird ein radial elastisch bewegbarer Scharnierbolzen mittels eines Sicherungsstiftes an einem Gelenkteil festgelegt, in dem die Rasteinrichtung sich nicht mehr radial nach innen bewegen kann. Die bekannte Lösung beschreibt zwar ein einfach und kostengünstig herstellbares Ventil, jedoch muss auch hier in den Leitungen noch verbleibendes Kondensat bzw. Wasser mit entsprechendem Aufwand entfernt werden.

Der Erfindung liegt daher die Aufgabe zugrunde, das eingangs genannte und zuvor näher beschriebene Ventil so auszugestalten und weiterzubilden, dass bei einfacher konstruktiver Ausgestaltung die angeschlossenen Schlauch- oder Rohrleitungen mit Luft ausgeblasen werden können, um in den Leitungen noch vorhandenes Kondensat bzw. Wasser zuverlässig zu entfernen, ohne dass auf den Vorteil der Druckentlastung verzichtet werden muss.

Diese Aufgabe wird erfindungsgemäß dadurch gelöst, dass in das Gehäuse ferner ein Luftzufuhreingang mündet und dass der kugelförmige Schließteil um mehr als 90° gedreht werden kann und so ausgebildet ist, dass nach der Schließbewegung um 90° der Schließteil bei geschlossenem Ventil weiter in Schließrichtung drehbar ist, bis der Ausgangsstutzen bei wieder geschlossener Druckentlastung mit dem Luftzufuhreingang in Verbindung steht (Ausblasstellung).

Die Erfindung hat erkannt, dass es möglich ist, mit einer einzigen Armatur die unerwünschten Rückstände in den angeschlossenen Leitungen zu entfernen, wenn neben den beiden bekannten Stellungen (Öffnungsstellung und Schließstellung) das Ventil noch in eine dritte Stellung (Ausblasstellung) verstellt werden kann. Dazu ist vorgesehen, dass die weitere Drehung um einen Winkel von 20° bis 45°, insbesondere 30°, erfolgt.

Um zu vermeiden, dass beim Verschließen des Ventils, also beispielsweise beim Abstellen der Dampfzufuhr, das Ventil unmittelbar in die Ausblasstellung gebracht wird, ist nach einer weiteren Ausgestaltung der Erfindung vorgesehen, dass der Hebel in seiner Verschließstellung federbelastet mit dem Gehäuse verrastbar ist. Auf diese Weise ist außerdem sichergestellt, dass ein unbeabsichtigtes Öffnen des Ventils in beide Richtungen verhindert wird.

Damit trotz der großen Drehbewegung sichergestellt ist, dass der kugelförmige Schließteil zentrisch angeordnet bleibt, um die Dichtfunktion aller Anschlüsse zu gewährleisten, ist der kugelförmige Schließteil nach einer weiteren bevorzugten Lehre der Erfindung doppelt gelagert.

Zum Eingangsstutzen, zum Druckentlastungsauslass und zum Luftzufuhreingang hin ist der kugelförmige Schließteil jeweils mit einem federbelasteten Dichtring abgedichtet. Dabei erfolgt bevorzugt die Führung der Dichtringe zum Druckentlastungsauslass und zum Luftzufuhreingang durch eingegossene Stege im kugelförmigen Schließteil. Als federbelastete Dichtringe werden bevorzugt solche aus glasfaserverstärktem Kunststoff (GFK), insbesondere PTFE, eingesetzt. Die eingesetzten Federn können sowohl Schrauben- als auch Tellerfedern sein.

Nach einer weiteren Lehre der Erfindung ist vorgesehen, dass der kugelförmige Schließteil aus Guss in hartverchromter Ausführung gefertigt ist. Diese Ausführungsform ist besonders zweckmäßig, um die erforderlichen unterschiedlichen Kanalformen im kugelförmigen Schließteil günstig herstellen zu können. Schließlich ist das Gehäuse des Ventils vorzugsweise aus Edelstahl hergestellt.

Die Erfindung wird nachfolgend anhand einer lediglich ein bevorzugtes Ausführungsbeispiel darstellenden Zeichnung, an der auch die Funktion des erfindungsgemäßen Ventils im einzelnen beschrieben wird, näher erläutert. In der Zeichnung zeigen
- Fig. 1: ein erfindungsgemäßes Ventil in Seitenansicht,
- Fig. 2: das Ventil aus Fig. 1 im Vertikalschnitt entlang der Linie II-II,
- Fig. 3: das erfindungsgemäße Ventil in Draufsicht,
- Fig. 4: das erfindungsgemäße Ventil aus Fig. 1, teilweise geschnitten, in Öffnungsstellung,
- Fig. 5: das erfindungsgemäße Ventil aus Fig. 1, teilweise geschnitten, in Schließstellung und
- Fig. 6: das erfindungsgemäße Ventil aus Fig. 1, teilweise geschnitten, in Ausblasstellung.

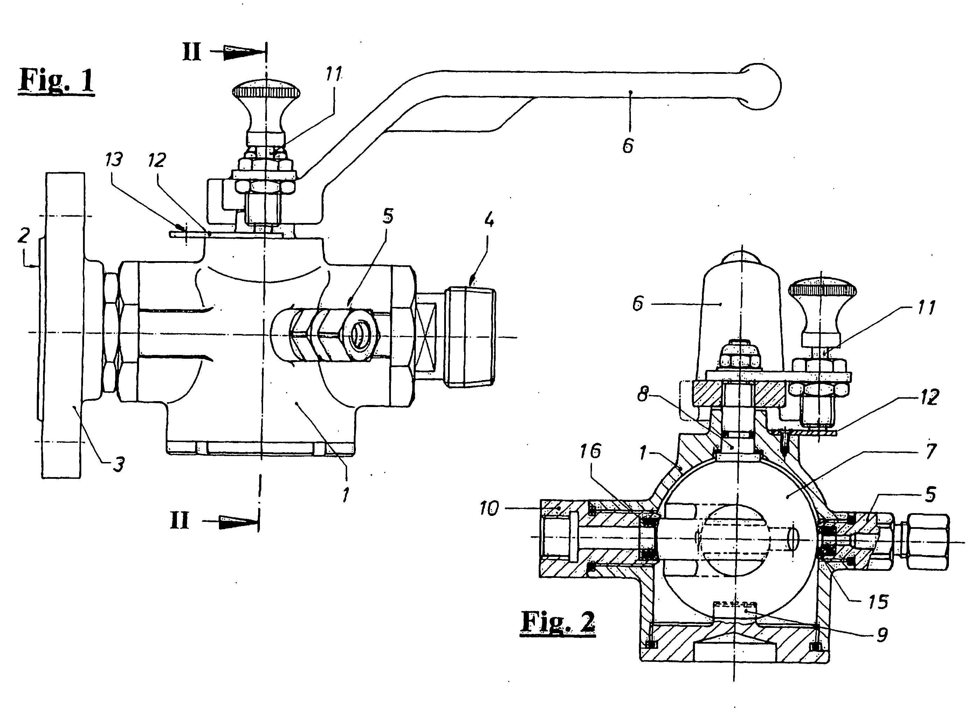

Ein erfindungsgemäßes Ventil ist in Fig. 1 in Seitenansicht dargestellt. Das Ventil weist zunächst ein Gehäuse 1 auf, in welches ein Eingangsstutzen 2, der im dargestellten und bevorzugten Ausführungsbeispiel mit einem Flansch 3 verschraubt ist, und ein Ausgangsstutzen 4 eingeschraubt sind. Seitlich herausstehend ist ein Druckentlastungsauslass 5 erkennbar, der in bekannter Weise dazu bestimmt ist, das Ventil in seiner Schließstellung so zu "schalten", dass eine an den Ausgangsstutzen 4 angeschlossene (nicht dargestellte) Ausgangsleitung mit dem Druckentlastungsauslass 5 verbunden ist, so dass sich gegebenenfalls noch ein in der Leitung befindlicher Dampfdruck auch bei geschlossenem Ventil abbauen kann. Anstelle des Flansches 3 und dem ein Gewinde aufweisenden Ausgangsstutzen 4 können auch andere beliebige Verbindungen, wie Kupplungen oder dergleichen, vorgesehen sein. Auch kann das Ventil direkt in eine Rohrleitung eingeschweißt werden.

Betätigt wird das Ventil mit einem als Handhebel ausgeführten Hebel 6, welcher mit einem kugelförmigen Schließteil 7 in Wirkverbindung steht, wie aus Fig. 2 ersichtlich. Im dargestellten und insoweit bevorzugten Ausführungsbeispiel ist der Schließteil 7 durch zwei Lager 8 und 9 an diametral gegenüberliegenden Seiten doppelt gelagert, damit seine Lage in allen Stellungen stets genau definiert ist. Aus Fig. 2 geht ferner hervor, dass in das Gehäuse 1 auch noch ein Luftzufuhreingang 10 mündet, der wiederum als Schraubstutzen ausgeführt ist. Es ist klar, dass sämtliche in das Gehäuse 1 eingeschraubte Kupplungen bzw. Stutzen mit entsprechenden nicht näher bezeichneten Dichtungen versehen sind.

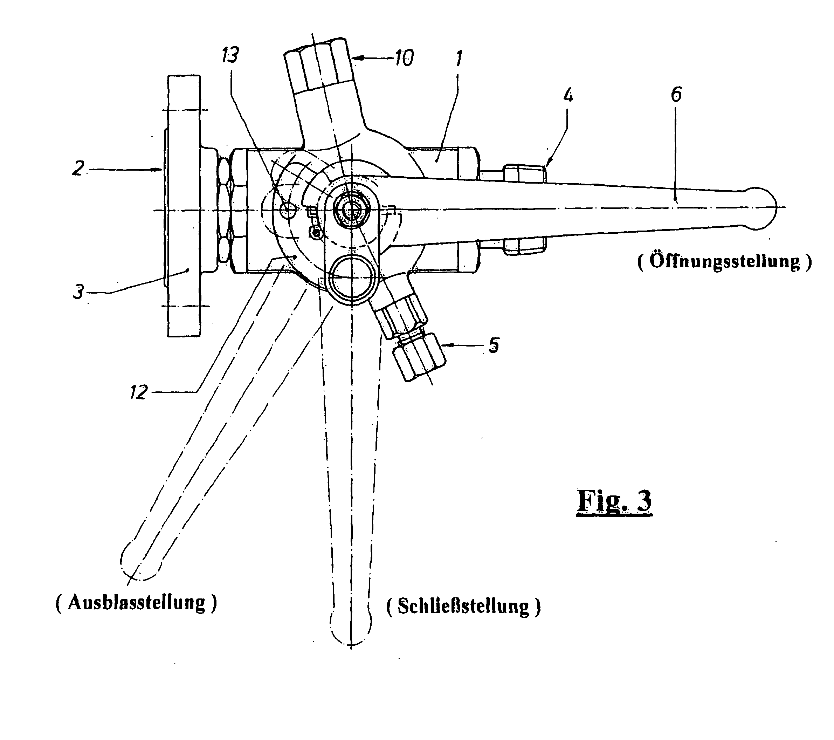

Fig. 3 zeigt nun das erfindungsgemäße Ventil in Draufsicht, wobei der Hebel 6 sich in der Öffnungsstellung befindet. In der bevorzugten dargestellten Ausführungsform ist der Hebel 6 in seiner Schließstellung, welche nur strichpunktiert angedeutet ist, mit dem Gehäuse 1 verrastbar ausgeführt. Dazu weist der Hebel 6 einen seitlich vom nicht näher bezeichneten Drehpunkt versetzten, mit einem Handgriff versehenen Stift 11 auf, welcher längsverschieblich mit etwas Spiel gelagert ist. Bei Erreichen der Schließstellung fällt der Stift 11 in eine in einem am Gehäuse 1 befestigten Blech 12 befindliche Bohrung 13, die besonders deutlich in Fig. 3 zu erkennen ist. Da das erfindungsgemäße Ventil auch in einer anderen Lage eingebaut sein kann, sieht eine weitere Ausgestaltung der Erfindung vor, dass der Stift 11 auch federbelastet ausgeführt sein kann, um unter allen Umständen eine entsprechende Verrastung des Hebels in der Schließstellung zu bewirken. Der Hebel 6 lässt sich erst nach dem manuellen Entrasten durch Betätigung des Stiftes 11 wieder in die Öffnungsstellung bringen.

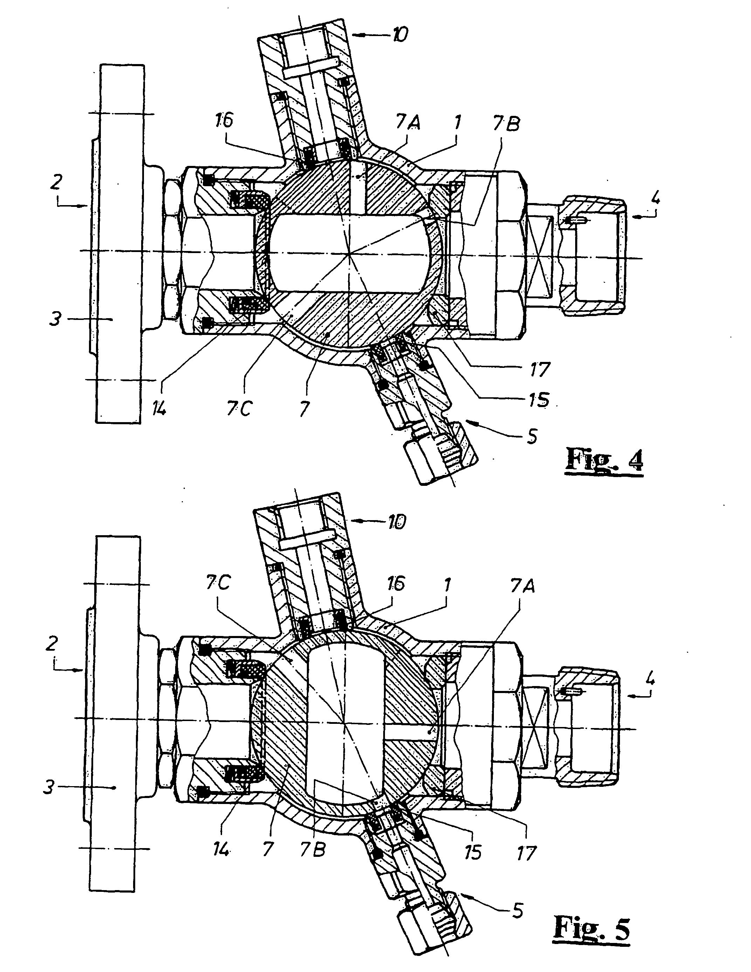

Schließlich ist in Fig. 3 noch eine dritte Stellung des Hebels 6 zu erkennen, nämlich die erfindungsgemäße Ausblasstellung. Hier sind der mit einer Druckluftleitung verbundene Luftzufuhreingang 10 des Gehäuses 1 und der Ausgangsstutzen 4 mit der daran angeschlossenen (nicht dargestellten) Leitung verbunden, so dass - bei geschlossener Dampfzufuhr - die Leitung ausgeblasen werden kann. Die Funktion des erfindungsgemäßen Ventils wird nachfolgend anhand der Schnittzeichnungen in den Fig. 4 bis 6 näher beschrieben.

Bei geöffnetem Absperrhahn, also der Stellung des erfindungsgemäßen Ventils gemäß Fig. 4, kann der durch den Eingangsstutzen 2 strömende Dampf durch die mittige und nicht näher bezeichnete Öffnung des kugelförmigen Schließteils 7 ungehindert in die an den Ausgangsstutzen 4 angeschlossene Leitung gelangen. Sowohl der Druckentlastungsauslass 5 als auch der Luftzufuhreingang 10 sind in dieser Stellung versperrt. Durch Betätigen des Hebels 6 und damit des kugelförmigen Schließteils 7 um 90° wird der Hauptdurchgang geschlossen, wie in Fig. 5 dargestellt ist. Durch die im kugelförmigen Schließteil 7 angeordneten Bohrungen 7A und 7B sind jedoch der Ausgangsstutzen 4 und der Druckentlastungsauslass 5 miteinander verbunden, so dass der Rest des in der Leitung befindlichen Dampfdruckes durch den Druckentlastungsauslass 5 entweichen kann. In dieser Stellung ist der Hebel 6 mit dem Gehäuse 1 verrastet.

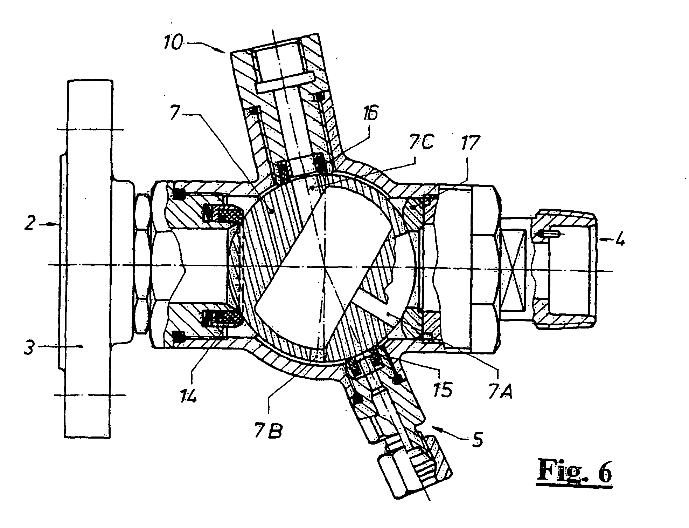

Wird nun nach entsprechender Entrastung der Hebel 6 weiter in "Schließrichtung" gedreht, befindet sich das Ventil in seiner Ausblasstellung, wie in Fig. 6 dargestellt ist. Nun kann eine an den Luftzufuhreingang 10 angeschlossene (nicht dargestellte) Druckluftleitung zum Ausblasen der an das Ventil angeschlossenen Leitungen verwendet werden.

Dabei strömt die Luft durch die Bohrung 7C im kugelförmigen Schließteil 7 und gelangt weiter durch die Bohrung 7A und eine entsprechende nur angedeutete Aufweitung bis in den Ausgangsstutzen 4 und die daran angeschlossenen Leitungen. Hierbei ist sowohl der Eingangsstutzen 2 als auch der Druckentlastungsauslass 5 verschlossen, so dass die gesamte angeschlossene Leitung nunmehr durch das Ventil belüftet und ausgeblasen werden kann. Ist dieser Vorgang beendet, wird der Hebel 6 in die Stellung gemäß Fig. 5 zurückgedreht, in der nun noch der Druckentlastungsauslass 5 und der Ausgangsstutzen 4 freigegeben wird. Durch die wiederholte Verrastung wird der Hebel 6 in dieser Schließstellung arretiert, so dass sowohl der am Eingangsstutzen 2 angeschlossene Dampfeingang 2 als auch die am Luftzufuhreingang 10 angeschlossene Druckluftleitung verschlossen sind.

Das erfindungsgemäße Ventil führt zu einem wesentlichen wirtschaftlichen Vorteil, da keine zusätzlichen Einrichtungen erforderlich sind, um die beim Stand der Technik vorhandenen Nachteile zu beseitigen. Es lassen sich mit einer einzigen Armatur zwei unterschiedliche Funktionen ausführen.

## Patentansprüche

1. Ventil, insbesondere Dampfventil, mit einem Gehäuse, in das ein Eingangsstutzen, ein Ausgangsstutzen und ein Druckentlastungsauslass münden, mit einem drehbeweglich gelagerten, kugelförmigen Schließteil, der von einem Hebel, insbesondere Handhebel, bewegbar ist, wobei in geschlossener Stellung der Ausgangsstutzen mit dem Druckentlastungsauslass in Verbindung steht,
**dadurch gekennzeichnet, dass**
in das Gehäuse (1) ferner ein Luftzufuhreingang (10) mündet und dass der kugelförmige Schließteil (7) um mehr als 90° gedreht werden kann und so ausgebildet ist, dass nach der Schließbewegung um 90° der Schließteil (7) bei geschlossenem Ventil weiter in Schließrichtung drehbar ist, bis der Ausgangsstutzen (4) bei wieder geschlossener Druckentlastung mit dem Luftzufuhreingang (10) in Verbindung steht.

2. Ventil nach Anspruch 1,
**dadurch gekennzeichnet, dass**
die weitere Drehung in die Ausblasstellung um einen Winkel von 20° bis 45° erfolgt.

3. Ventil nach Anspruch 2,
**dadurch gekennzeichnet, dass**
die weitere Drehung in die Ausblasstellung um einen Winkel von 30° erfolgt.

4. Ventil nach einem der Ansprüche 1 bis 3,
**dadurch gekennzeichnet, dass**
der Hebel (6) in seiner Schließstellung mit dem Gehäuse (1) verrastbar ist.

5. Ventil nach Anspruch 4,
**dadurch gekennzeichnet, dass**
die Verrastung federbelastet erfolgt.

6. Ventil nach einem der Ansprüche 1 bis 5,
**dadurch gekennzeichnet, dass**
der kugelförmige Schließteil (7) doppelte Lager (8, 9) aufweist.

7. Ventil nach einem der Ansprüche 1 bis 6,
**dadurch gekennzeichnet, dass**
der kugelförmige Schließteil (7) zum Eingangsstutzen (2), zum Druckentlastungsauslass (5) und zum Luftzufuhreingang (10) in je mit einem federbelasteten Dichtring (14, 15, 16) abgedichtet ist.

8. Ventil nach Anspruch 7,
**dadurch gekennzeichnet, dass**
zur Führung der Dichtringe (15, 16) zum Druckentlastungsauslass (5) und zum Luftzufuhreingang (10) eingegossene Stege im kugelförmigen Schließteil (7) vorgesehen sind.

9. Ventil nach Anspruch 7 oder 8,
**dadurch gekennzeichnet, dass**
die Dichtringe (14, 15, 16) aus glasfaserverstärktem Kunststoff (GFK), insbesondere PTFE, bestehen.

10. Ventil nach einem der Ansprüche 1 bis 9,
**dadurch gekennzeichnet, dass**
der kugelförmige Schließteil (7) zum Ausgangsstutzen (4) hin mit einem Druckring (17) aus Lagermetall abgestützt ist.

11. Ventil nach einem der Ansprüche 1 bis 10,
**dadurch gekennzeichnet, dass**
der kugelförmige Schließteil (7) aus Guss in hartverchromter Ausführung gefertigt ist.

12. Ventil nach einem der Ansprüche 1 bis 11,
**dadurch gekennzeichnet, dass**
das Gehäuse (1) aus Edelstahl besteht.

## Claims

1. A valve, in particular a steam valve, comprising a housing into which an inlet connection, an outlet connection and a pressure release outlet open, comprising a rotatably mounted, spherical closing part, which can be displaced by a lever, in particular a hand lever, wherein in the closed position the outlet connection is in communication with the pressure release outlet, **characterised in that** an air supply inlet (10) also opens into said housing (1) and that said spherical closing part (7) can be rotated through more than 90° and is configured in such a way that once it has completed its closing movement through 90°, said closing part (7) can be further rotated in the closing direction when the valve is closed until the outlet connection (4) is in communication with the air supply inlet (10) when the pressure release outlet has been closed again.

2. The valve according to claim 1,
**characterised in that** the further rotation into the purging position takes place through an angle of 20° to 45°.

3. The valve according to claim 2,
**characterised in that** the further rotation into the purging position takes place through an angle of 30°.

4. The valve according to any one of claims 1 to 3,
**characterised in that** the lever (6) can be located with the housing (1) in its closed position.

5. The valve according to claim 4,
**characterised in that** the locating is effected in a spring-loaded fashion.

6. The valve according to any one of claims 1 to 5,
**characterised in that** the spherical closing part (7) has double bearings (8, 9).

7. The valve according to any one of claims 1 to 6,
**characterised in that** the spherical closing part (7) is sealed with respect to the inlet connection (2), the pressure release outlet (5) and the air supply inlet (10) using respectively one spring-loaded sealing ring (14, 15, 16).

8. The valve according to claim 7,
**characterised in that** for guidance of the sealing rings (15, 16) towards the pressure release outlet (5) and towards the air supply inlet (10) infused cross-pieces are provided in the spherical closing part (7).

9. The valve according to claim 7 or 8,
**characterised in that** the sealing rings (14, 15, 16) consist of glass-fibre-reinforced plastic (GFP), in particular PTFE.

10. The valve according to any one of claims 1 to 9,
**characterised in that** the spherical closing part (7) is supported with respect to the outlet connection (4) using a pressure ring (17) made of bearing metal.

11. The valve according to any one of claims 1 to 10,
**characterised in that** the spherical closing part (7) is made of cast iron in a hard-chrome-plated design.

12. The valve according to any one of claims 1 to 11,
**characterised in that** the housing (1) consists of stainless steel.

## Revendications

1. Vanne, en particulier vanne à vapeur, comprenant un boîtier, dans lequel débouchent une tubulure d'entrée, une tubulure de sortie et une sortie de détente, avec une pièce de fermeture sphérique montée à rotation, qui peut être déplacée par un levier, en particulier une manette, la tubulure de sortie étant, en position fermée, raccordée à la sortie de détente,
**caractérisée en ce qu'**une entrée d'alimentation en air (10) débouche en outre dans le boîtier (1) et **en ce que** la pièce de fermeture sphérique (7) peut pivoter de plus de 90° et est conformée de sorte qu'après le mouvement de fermeture de 90°, la pièce de fermeture (7) puisse encore tourner, alors que la vanne est fermée, dans le sens de fermeture jusqu'à ce que la tubulure de sortie (4) soit raccordée à l'entrée d'alimentation en air (10) lorsque la détente est refermée.

2. Vanne selon la revendication 1,
**caractérisée en ce que** la rotation suivante dans la position de purge s'effectue sur un angle de 20° à 45°.

3. Vanne selon 1a revendication 2,
**caractérisée en ce que** la rotation suivante dans la position de purge s'effectue sur un angle de 30°.

4. Vanne selon l'une quelconque des revendications 1 à 3,
**caractérisée en ce que** le levier (6), dans sa position de fermeture, peut être enclenché avec le boîtier (1).

5. Vanne selon la revendication 4,
**caractérisée en ce que** l'enclenchement s'effectue sous l'action d'un ressort.

6. Vanne selon l'une quelconque des revendications 1 à 5,
**caractérisée en ce que** la pièce de fermeture sphérique (7) présente des doubles paliers (8, 9).

7. Vanne selon l'une quelconque des revendications 1 à 6,
**caractérisée en ce que** la pièce de fermeture sphérique (7) est étanchée par rapport à la tubulure d'entrée (2), à la sortie de détente (5) et à l'entrée d'alimentation en air (10) avec, dans chacun de ceux-ci, une bague d'étanchéité à ressort (14, 15, 16).

8. Vanne selon la revendication 7,
**caractérisée en ce que**, pour guider les bagues d'étanchéité (15, 16) vers la sortie de détente (5) et vers l'entrée d'alimentation en air (10), il est prévu dans la pièce de fermeture sphérique (7) des nervures venues de fonte.

9. Vanne selon la revendication 7 ou 8,
**caractérisée en ce que** les bagues d'étanchéité (14, 15, 16) sont constituées de matière plastique renforcée de fibres de verre (GFK), en particulier de PTFE.

10. Vanne selon l'une quelconque des revendications 1 à 9,
**caractérisée en ce que** la pièce de fermeture sphérique (7) est soutenue vers la tubulure de sortie (4) par une bague de serrage (17) en métal antifriction.

11. Vanne selon l'une quelconque des revendications 1 à 10,
**caractérisée en ce que** la pièce de fermeture sphérique (7) est fabriquée en fonte dans une réalisation en chromage dur.

12. Vanne selon l'une quelconque des revendications 1 à 11,
**caractérisée en ce que** le boîtier (1) est en acier fin.
